# FASCICULE DE BREVET EUROPEEN

(11) **EP 2 056 489 B1**
(45) Date de publication et mention de la délivrance du brevet: **21.11.2012**
(21) Numéro de dépôt: 08291015.9
(22) Date de dépôt: 29.10.2008
(51) Int. Cl.: H04B 7/185, G08G 5/00

(54) **Procédé de transmissions multiplexées de communications vocales du type à débit limité et à l'alternat**
Verfahren zur Übertragung von multiplexierten datenratenbegrenzten und Push-to-talk Sprachkommunikationen
Method for transmitting multiplexed rate-limited and push-to-talk voice communications

(30) Priorité: 29.10.2007 FR 0707589
(43) Date de publication de la demande: 06.05.2009
(73) Titulaire: CS Système d'Information, 92350 Le Plessis Robinson (FR)
(72) Inventeur: Pottier, Hervé, 91600 Savigny sur Orge (FR); Meunier, Jean-Claude, 92120 Montrouge (FR)
(74) Mandataire: Bloch, Gérard

(56) Documents cités:
- US-A- 5 798 726
- US-B1- 6 185 430

## Description

L'invention concerne les systèmes de télécommunications numériques vocales, du type à débit limité et à l'alternat, utilisé dans les systèmes de contrôle aériens civils et militaires pour assurer les liaisons phoniques entre les opérateurs de contrôle aérien et les membres des postes de pilotage des avions sous contrôle.

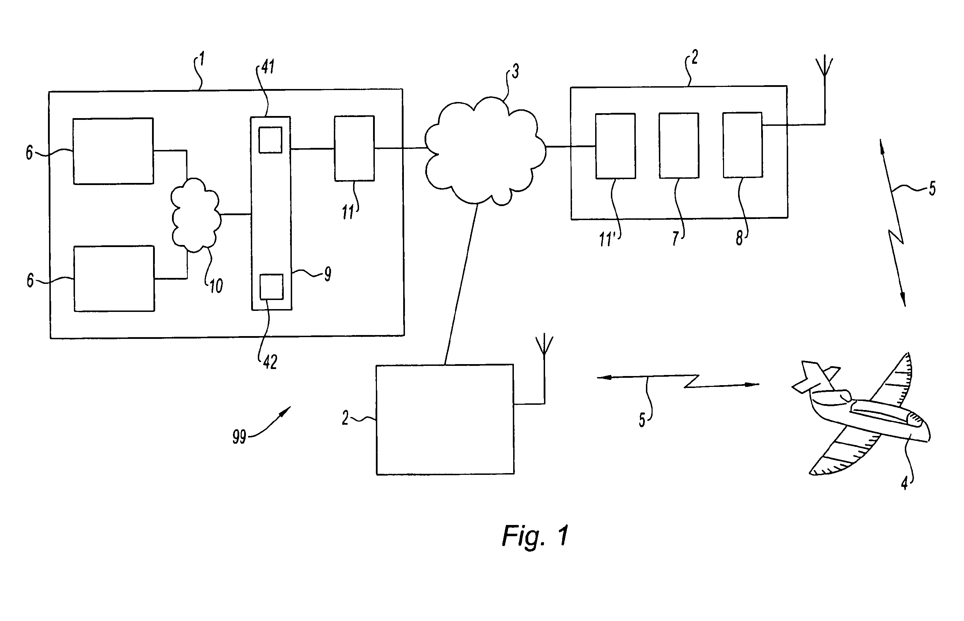

La chaîne phonique de ces systèmes de télécommunications comporte, en référence à la figure 1, un centre de contrôle 1 géographiquement bien localisé, dont les fonctions peuvent s'apparenter à celles d'un PABX (Private Automatic Branch eXchange ou autocommutateur privé), des centres radio 2 en liaison radio analogique 5 avec des avions 4 dont le vol est à contrôler, le centre de contrôle 1 et les divers centres radio 2 étant reliés par un réseau de communication numérique RNIS 3 classique (réseau numérique à intégration de services) s'appuyant sur des canaux B à 64 kilobits par seconde.

Les centres radio 2 sont ainsi situés en déport géographique du centre de contrôle 1, par exemple à plusieurs centaines de kilomètres de distance, et sont répartis convenablement pour permettre la couverture d'une zone aérienne à contrôler.

Les liaisons radio 5 sont du type « à l'alternat ». En l'absence de toute émission d'un opérateur de contrôle, la liaison phonique au sol est établie dans le sens avion - centre de contrôle.

Quand le contrôleur souhaite parler au pilote, il émet un signal d'alternat, ce qui commande au niveau des centres radio 2 d'émettre les données de phonie reçues du centre 1 par le réseau RNIS vers l'avion 4 sur une fréquence avion déterminée, ici en VHF ou UHF, après conversion numérique - analogique.

Inversement, si le pilote émet un signal depuis l'avion 4, il commande les centres radio 2 à sa portée radio de recevoir les signaux analogiques de phonie qu'il a émis à la même fréquence que ci-dessus et de les retransmettre, après conversion analogique - numérique, sur le réseau RNIS vers le centre de contrôle 1, accompagné d'un « appel avion ».

Dans les deux cas, les signaux ou données numériques d'alternat ou d'appel avion sont joints aux signaux ou données numériques de phonie et constituent, pour partie, des données de service contribuant à la gestion des appels au niveau du centre de contrôle et au niveau des centres radio.

Ainsi à tout instant, un ensemble d'avions peut être contrôlé grâce, en partie, au traitement de toutes les données de phonie et de service associées.

Au niveau des centres de communication radio, la puissance des signaux de réception résultant des signaux émis au niveau des avions est relevée et la mesure correspondante est jointe aux données de service émises sur le réseau RNIS vers le centre de contrôle.

C'est le centre de contrôle qui finalement sélectionne, pour un avion donné, les signaux phoniques à traiter parmi ceux issus des divers centres radio. Il choisit en temps réel celui dont la qualité de réception est la plus grande et, en conséquence, associe à chaque avion de la zone aérienne contrôlée les centres radio les plus à même de recevoir ses signaux (le plus proche, souvent).

Le trafic aérien s'intensifiant et les capacités de communication étant couteuses, la demanderesse a voulu améliorer ces communications.

Ayant constaté que le débit réellement employé sur le réseau RNIS pour transmettre une communication vocale était très excessif relativement aux exigences de qualité auditive, la demanderesse en est arrivée à poser le problème d'optimiser l'utilisation du réseau entre le centre de contrôle et les centres radio en laissant inchangées les communications radio entre ces derniers et les postes de pilotage des avions.

Et c'est ainsi qu'elle propose son invention.

L'invention concerne donc un procédé de transmission de communications vocales du type à débit limité et à l'alternat tel que défini dans la revendication 1.

La demanderesse, constatant qu'un débit de 16 kilobits suffisait pour transmettre par le réseau une communication radio vocale avion, propose de multiplexer l'ensemble des communications des avions sans prédéterminer, comme il est ordinairement fait dans un système de communications multiplexées, ni les centres du second niveau qui doivent réaliser le multiplexage ni la constitution des groupes de multiplexage.

Pour cela, on utilise des multiplexeurs logiciels que l'on commande au fil du temps en fonction des besoins de communications phoniques avec les avions en transit dans la zone à contrôler.

Ici, le groupe peut contenir n = 3 communications vocales multiplexées, soit en tout un débit de 48 kilobits par seconde, et des données de service multiplexées avec les trois communications vocales à un débit de 16 kilobits par seconde, ce qui porte à 64 kilobits par seconde le débit total d'une transmission multiplexée du groupe.

Lesdites données de service contiennent alors au moins les données de service des n communications vocales multiplexées.

De préférence, on détermine le groupe des n postes du troisième niveau au centre du premier niveau en même temps que l'on y sélectionne au moins un centre du second niveau assurant le déport phonique desdits n postes du troisième niveau.

De préférence encore, c'est au premier niveau qu'on sélectionne le centre du second niveau pour servir de déport phonique d'un poste du troisième niveau, la sélection étant effectuée en fonction des puissances des signaux analogiques dudit poste du troisième niveau reçues au second niveau.

Avantageusement, les données de puissance des signaux analogiques reçus des postes du troisième niveau sont transmis au centre du premier niveau étant incluses dans lesdites données de service.

D'autres caractéristiques et avantages de la présente invention apparaîtront plus clairement à la lecture de la description ci-après du procédé selon l'invention, faite en référence au dessin annexé sur lequel :
- la figure 1 est un schéma montrant la structure d'un système de télécommunications numériques vocales utilisé dans un système de contrôle aérien ;
- la figure 2 est un schéma par blocs fonctionnels d'un terminal comprenant le module de multiplexage de l'invention;
- la figure 3 est un schéma par blocs fonctionnels d'un récepteur exploitant le multiplexage selon l'invention ;
- la figure 4 est un chronogramme montrant le multiplexage d'un groupe de communications tel qu'utilisé entre les premier et second niveaux de communication selon l'invention et
- la figure 5 est un chronogramme de fonctionnement du système comportant le terminal et le récepteur des figures 2 et 3.

En référence à la figure 1, le système de communication 99 comporte, à un premier niveau de communication, un centre de contrôle 1, généralement désigné VCS (« voice communication system »), à un second niveau de communication, plusieurs centres radio 2 reliés au centre de contrôle par un réseau de communication 3, de type RTC ou RNIS, dans ce dernier cas sur le canal B, et, à un troisième niveau de communication, des postes radio (non représentés) de poste de pilotage d'avion 4 sous contrôle radio du centre de contrôle 1.

Le centre de contrôle 1 comporte un ensemble de terminaux 6, appelés ici postes opérateurs de contrôle (POC), structurés autour d'un autocommutateur 9, ici un équipement SAF 3000 de la société communication en systèmes, relié au réseau par une interface de ligne 11.

L' autocommutateur 9 est ici un autocommutateur intelligent permettant aux POC 6 d'être reliés aux centres radio 2 et les centres radio 2 aux avions 4.

L'autocommutateur 9 sélectionne le centre radio 2 du second niveau pour servir de déport phonique pour chaque poste radio avion 4 du troisième niveau, la sélection étant effectuée en fonction de la comparaison des puissances P des signaux analogiques individuellement pour chacun de ces postes radio 4 reçus aux centres radio 2 du second niveau. Les puissances P des signaux analogiques lui sont transmises comme il sera précisé ci-dessous.

L'autocommutateur 9 coordonne ainsi le réseau des communications établies en sélectionnant en permanence les centres radio 2 à mettre en relation phonique avec tel ou tel avion 4 et en diffusant les choix d'utilisation du réseau global ainsi faits aux POC 6 et aux centres radio 2. Les choix d'utilisation du réseau et les choix de coordination sont codifiés numériquement et constituent des données de service.

L'interface 11 cumule en plus ici les fonctions de chiffrement /déchiffrement. Chaque centre radio 2 est connecté au réseau public 3 et les données numériques transitant sur le réseau public 3 sont chiffrées.

Les POC 6 sont reliés à l'autocommutateur 9 par un réseau informatique 10 du type intranet.

Chaque centre radio 2 comporte, reliée au module 11' et donc au réseau 3, un terminal 7 qui est également un équipement SAF 3000 délivrant et recevant ses informations à un terminal radio 8, ici du type VHF ou UHF, lui-même en liaison radio 5 avec les postes de pilotage des avions 4 à portée radio.

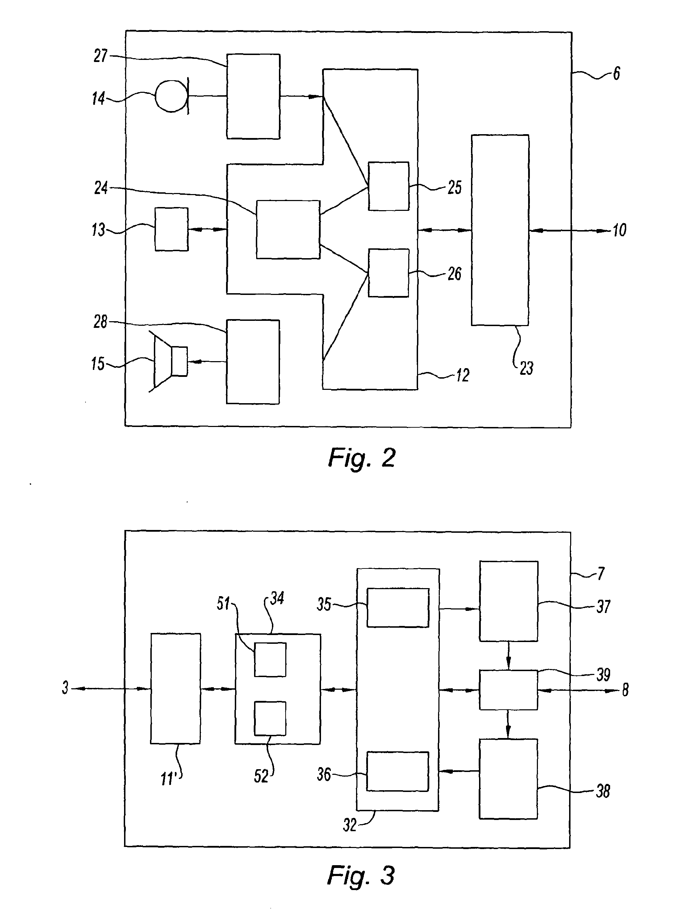

Chaque POC 6, en référence à la figure 2, comporte un module d'interface homme-machine 13 servant notamment à introduire des données de service et à effectuer une commande d'alternat, un module 24
i) de récupération des données de service ci-dessus et celles issues de l'autocommutateur 9 et
ii) de commandes d'alternat, une interface numérique 23 et un bloc 12 de gestion temps réel du POC 6 et incluant un module 26 de séparation des données de phonie et des données de service et un module 25 d'assemblage des données de phonie et des données de service, un microphone 14 en sortie duquel est connecté un convertisseur analogique - numérique 27, convertissant la phonie analogique reçue du micro 14 en une suite d'octets d'intensité phonique représentatives d'une communication vocale, et un haut-parleur 15 en entrée duquel est inséré un convertisseur numérique - analogique 28 convertissant une suite d'octets d'intensité phonique représentatives d'une communication vocale reçue en des signaux de phonie analogique.

La voix est échantillonnée à 8 kilohertz et sa numérisation est effectuée avec un codage selon la loi A de la recommandation G.711 et donne des octets de phonie à la fréquence d'échantillonnage ci-dessus.

Le terminal 7, en référence à la figure 3, comporte symétriquement une interface numérique 34 en liaison avec le module interface 11' recevant ou émettant des données numériques de phonie et de service, un bloc 32 de gestion temps réel des données phoniques et de service ci-dessus incluant un module 35 de séparation des données de phonie et des données de service et un module 36 d'assemblage des données de phonie et des données de service, un module 39 commutateur d'alternat, recevant ses commandes du bloc 32, d'une ligne d'émission 37, et commandant une ligne 38 de réception des données de phonie et d'alternat ou d'appel avion, venant du centre 1 vers l'avion 4 ou venant de l'avion 4 vers le centre 1.

La commande de commutation du commutateur 39 résulte de la reconnaissance, par le bloc 32, des signaux d'alternat présents dans des données de service jointes aux données de phonie par le bloc de gestion 12, qui reçoit celles de l'autocommutateur 9 comme ordinairement, et des appels avion reçus par le module radio 8 et transmis au bloc 32 par le module 39.

Le module de gestion 12 reçoit les données numériques vocales issues du micro 14, récupère les signaux numériques d'alternat de l'interface 13, assemble ces données et les transmet à l'interface numérique 23 pour émission sur le réseau intranet 10 vers l'autocommutateur 9, lequel émet ces données à travers le réseau 3 selon les commutations qu'il a établies, comme à l'ordinaire, vers les centres radio 2.

Les centres radio 2 émettent à leur tour les données vocales, ou de phonie, vers l'avion 4 par la liaison radio 5 et, pour confirmer cette émission renvoient un signal d'accusé de réception du module radio 8 et un signal de retour d'écoute au centre de contrôle 1.

Le module de gestion 32 reçoit les données numériques vocales et les signaux numériques d'alternat et de données de service issues de l'interface 34, sépare ces données les unes des autres et exploite les données de service pour transmettre ces données vers le module radio 8 pour émission radio 5 à l'avion 4 désigné dans les données de service.

Ici, entre les premier et second niveaux, on multiplexe et on demultiplexe les communications montantes des POC 6 vers les avions 4 et des communications descendantes des avions 4 vers les POC 6.

Pour cela l'autocommutateur 9, ou le module de gestion 23, constitue des groupes Gk de n communications bidirectionnelles, montantes et descendantes, transitant par un même centre radio 2 susceptibles d'être multiplexées et transmises simultanément sur le réseau 3.

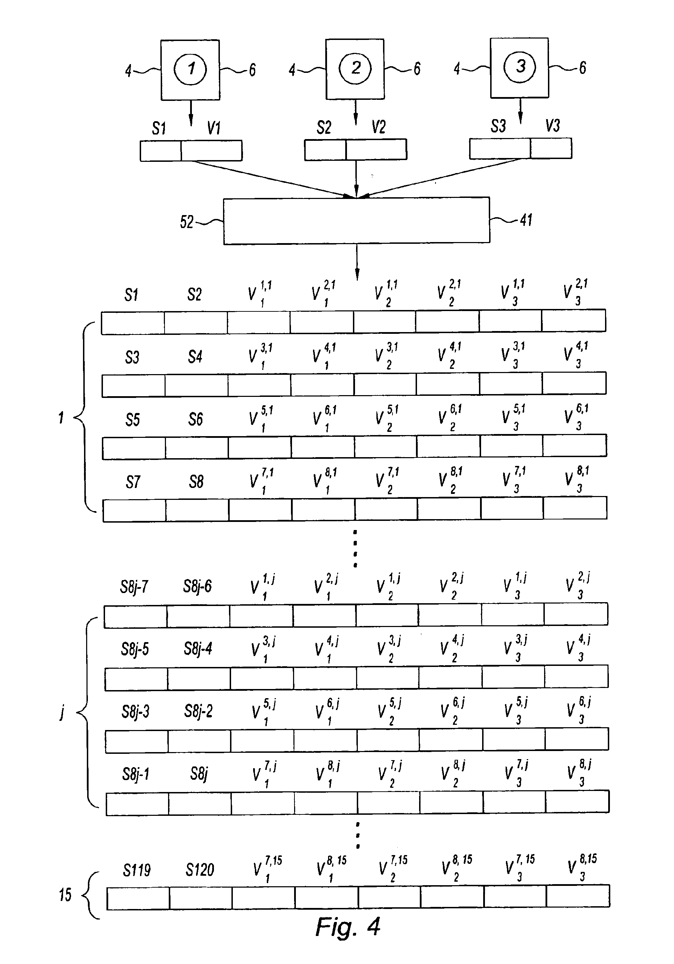

L'autocommutateur 9 comporte en plus un module de multiplexage 41 et un module de démultiplexage 42, et chaque centre radio 2 comporte en plus, inclus dans le module 34, des modules de multiplexage 52 et de démultiplexage 51, de fonctionnement similaire qui va maintenant être décrit, en référence à la figure 4.

Comme l'autocommutateur décide de la gestion du réseau 3 et des liaisons radio 5, il détermine les n POC 6 ou les n avions 4 d'un même groupe Gk, c'est-à-dire les n POC 6 du premier niveau ou les n avions 4 du troisième niveau qui sont attachés à un même centre radio 2 du deuxième niveau.

Pour optimiser l'utilisation du réseau 3, on choisit ici n égal à trois. Ainsi, les modules de multiplexage 41, 52 et de démultiplexage 51 et 42 peuvent être commandés au fil du temps en fonction des besoins de communications phoniques avec les POC 6 ou les avions 4 en transit dans la zone à contrôler.

Prenons l'exemple des communications issues des POC 6 et à destination des centres 2, mais la description des communications inverses est semblable.

Les données de trois POC 6 sont constituées des données de service S1, S2, S3 et des données de phonie V1, V2, V3, c'est-à-dire en désignation généralisée : le POC k envoie des données de service Sk et des données de phonie Vk compressées à 16kb/s.

Les données de phonie Vk sont des flux d'octets de phonie (dont les bits sont notés vₖ^{1,t}, ..., vₖ^{8,t}) échantillonnés dans le temps (ici d'indice t) à une vitesse de 8 kilohertz. On remarquera au passage que cette vitesse correspond à une vitesse de transfert de 64 kilobits par seconde.

Le module 41 va préserver cette vitesse de transfert globalement pour le transfert des données issues des trois POC 6 en les multiplexant temporellement dans des trames de soixante octets chacune.

Une trame de ce type a été représentée en bas de figure 4. Chaque octet de la trame comporte deux bits de données de service et deux bits de données de phonie de chaque POC 6. Par exemple, le premier octet de la trame contient les deux premiers bits s₁ et s₂ de l'ensemble des données Sk ou de données S comme défmies ci-dessous, et les deux premiers bits vₖ^{1,1} et vₖ^{1,2} des données Vk de chaque POC k.

Les données Sk sont assemblées en données de service S communes sans difficulté puisque elles sont toutes destinées au même centre radio 2. Dans le système considéré, elles comportent ensemble les données suivantes (dans l'un ou l'autre des sens de communication) :
- trois appels avion ou alternats,
- trois alarmes,
- trois informations de niveau de champ reçu (les puissances P),
- trois informations de chiffrement.

Toutes ces données S tiennent ici dans 90 bits mais il a été prévu une capacité plus large de 120 bits. Cette capacité conditionne la longueur de la trame utilisée car, à raison de deux bits de données S par octet de la trame, il en résulte qu'elle doit comporter un paquet Pk de 60 octets.

Sur la figure 4, on a représenté ces 60 octets par sous-paquets de quatre octets multiplexés numérotés par l'indexe j, j prenant ses valeurs de 1 à 15. En effet, un sous-paquet j contient les huit bits vₖ^{1,j} à vₖ^{8,j} de chacun des trois octets Vk issus simultanément des trois POC 6. Le sous-paquet j contient également les huit bits s_{8.j-7} , s_{8.j-6} , s_{8.j-5} , s_{8.j-4} , s_{8.j-3} , s_{8.j-2} , s_{8.j-1} , s_{8.j} extraits des 120 bits de données S.

Le module 41 comporte un multiplexeur logiciel agencé pour assembler les données de service S comme ci-dessus à partir des POC 6 et multiplexer les données S et les données Vk comme indiqué ci-dessus.

De même, pour multiplexer les communications émises par trois avions 4, le module 52 comporte un logiciel de multiplexage identique pour assembler les données de service S, comme ci-dessus, et multiplexer les données S et les données de phonie V générées par le convertisseur 38.

Inversement, les module 42 et 51 sont agencés pour démultiplexer les données S et les données de phonie multiplexées. Les données de service S issues des communications provenant des avions 4 sont reprises par le module 32 et par le bloc 9 et le module 12 pour traitements ultérieurs, dont l'exploitation des niveaux de champ reçus ou bien celle des puissances P des signaux analogiques reçus, mesurées et transmises par le module radio 8 dans les données de service.

C'est cette exploitation qui permet à l'autocommutateur 9, par comparaison des puissances P, de gérer l'ensemble des communications et d'affecter, au fil des communications, le meilleur centre radio 2 du second niveau pour chacun des avions 4 du troisième niveau.

Naturellement, les données de service S ne peuvent être exploitées qu'une fois une trame reçue complètement, c'est-à-dire au bout de soixante fois 125 microsecondes, soit 7,5 millisecondes.

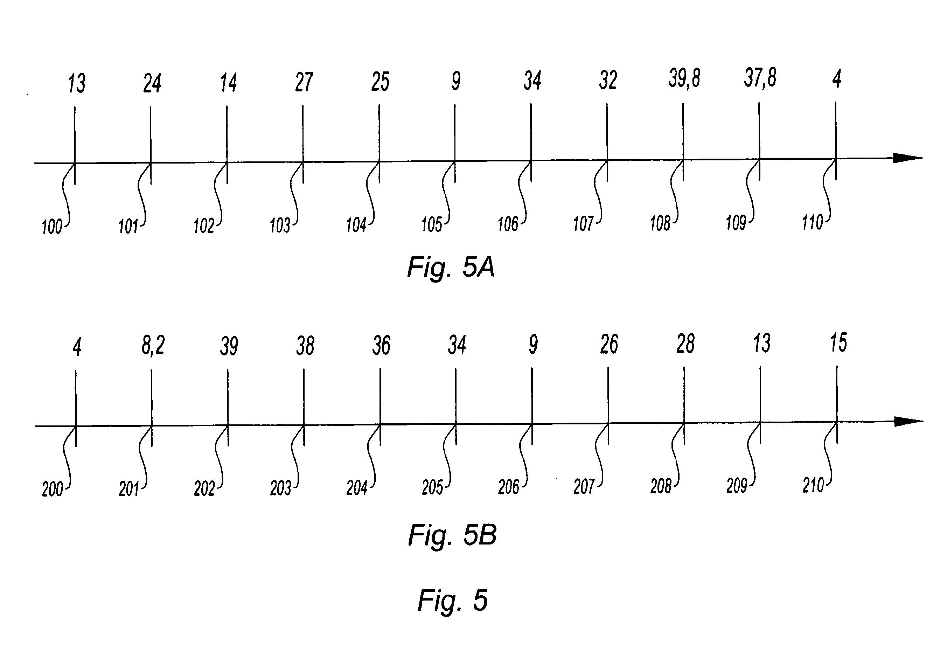

Le fonctionnement du système 99 au cours d'un échange de communications à l'alternat et à l'appel avion va maintenant être détaillé chronologiquement, en référence à la figure 5, en omettant, pour simplifier, les opérations de chiffrement.

A l'alternat, sur la figure 5-A, intervient une émission vocale du centre 1 vers un avion 4 via le centre radio 2. Supposons que plusieurs communications phoniques soient en cours entre le centre radio 2 et plusieurs POC 6. Se succèdent alors les étapes suivantes :
- étape 100 : l'opérateur d'un POC 6 commande l'alternat pour parler à l'équipage d'un avion 4 ;
- étape 101 : le module 24 constitue une suite d'octets de données de service incluant la commande d'alternat de l'étape 100 ;
- étape 102 : l'opérateur parle dans le micro 14 et
- étape 103 : les intensités sonores qui en résultent sont échantillonnées à 8 kilohertz et converties en suites d'octets par le convertisseur 27 ;
- étape 104 : le module 25 emet en IP vers l'autocommutateur 9 la suite d'octets des données de service, ainsi que la suite d'octets de phonie à la vitesse de 64 kilobits par seconde via l'interface numérique 23 ;
- étape 105 : l'autocommutateur 9 reçoit cette communication simultanément avec d'autres communications émises par d'autres POC 6, il les compresse puis les rassemble en autant de groupes de trois communications destinées aux mêmes centres 2 qu'il est nécessaire pour les émettre toutes en temps réel et il multiplexe temporellement (module 41) les trois communications de chaque groupe comme expliqué précédemment pour enfin émettre tous les groupes vers les centres radio 2 à travers le réseau 3 via l'interface 11 à 64 kilobits par seconde ;
- étape 106 : le centre radio 2 reçoit la communication ci-dessus via les interfaces 11' et 34, le module 34 démultiplexant (module 51) les trois communications de chaque groupe lui parvenant et reconstituant les suites d'octets d'origine pour les transmettre au bloc 32 ;
- étape 107 : le module 35 du bloc 32 sépare les données de service des données de phonie et décompresse ces dernières, puis les transmet au bloc 37 qui les transforme en analogique à destination du terminal radio 8 ;
- étape 108 : le bloc 32 traite ensuite les données de service et commande le module 39 qui émet une commande d'alternat vers le terminal radio 8 ;
- étape 109 : sur réception du retour d'alternat d'accusé de réception transmis par le terminal radio 8 et le module 39, le bloc 32 provoque le renvoi de l'information de retour d'alternat vers le centre 1;
- étape 110 : le terminal radio 8 émet la phonie vers l'avion 4.

A l'appel avion, sur la figure 5-B, intervient une émission vocale de l'avion 4 vers le centre 1 via le centre radio 2. Se succèdent alors les étapes suivantes :
- étape 200 : le pilote de l'avion 4 commande l'émission de son poste radio ;
- étape 201 : l'avion 4 émet la phonie vers le terminal radio 8 et les signaux analogiques qui en résultent sont reçus par le bloc 38 ;
- étape 202 : le terminal radio 8 reçoit l'appel de l'avion 4 et génère un appel avion vers le commutateur 39 ;
- étape 203 : le convertisseur 38 échantillonne à huit kilohertz la phonie reçue et convertit les intensités sonores qui en résultent en suite d'octets compressée à 16kb/s ;
- étape 204 : le module 36 assemble la suite d'octets des données de service et la suite d'octets de phonie compressée ;
- étape 205 : l'interface 34 effectue le multiplexage temporel (module 52) des communications en cours transitant par le centre radio 2 vers le centre de contrôle 1 et émet la communication numérique ainsi constituée vers l'autocommutateur 9 à travers le réseau 3 via les interfaces de ligne 11' et 11,
- étape 206 : l'autocommutateur 9 démultiplexe (module 42) les communications présentes dans le groupe reçu, isole la communication de la voie considérée et aiguille cette communication après décompression de la phonie, vers les POC 6 qui sont à l'écoute sur cette voie ;
- étape 207 : le module 26 du POC 6 sépare les données de service des données de phonie et transmet les données de phonie au bloc 28 et les données de service au bloc 3;
- étape 208 : le convertisseur 28 effectue la conversion numérique - analogique, à 8 kilohertz, des données de phonie reçues ;
- étape 209 : le module 24 affiche les données de service sur l'interface homme-machine 13 et
- étape 210 : le haut parleur 15 diffuse la phonie.

## Revendications

1. Procédé de transmission de communications vocales du type à débit limité et à l'alternat, entre un centre de contrôle au sol (1) situé à un premier niveau de communication et des postes (4), en liaison phonique avec le centre de contrôle (1), de pilotage d'avion (4) transitant dans une zone géographique prédéterminée et constituant un troisième niveau de communication, par l'intermédiaire de centres (2) d'émission-réception radio en déport phonique entre lesdits premier et troisième niveaux, ces centres radio au sol (2) constituant un second niveau de communication en liaison numérique (3) avec ledit premier niveau et en liaison radio analogique (5) avec ledit troisième niveau,
le centre de contrôle (1) sélectionnant en permanence au premier niveau, pour chacun des avions (4), le meilleur centre (2) d'émission-réception radio du second niveau effectivement utilisé en déport phonique d'un poste (4) du troisième niveau, la sélection étant effectuée en fonction des puissances (P) des signaux analogiques dudit poste (4) du troisième niveau reçues au second niveau,
procédé **caractérisé par le fait que** :
- à chaque centre (2) du second niveau, on associe au moins un groupe (Gk) d'un certain nombre n de postes (4) du troisième niveau sur la base de l'exploitation par le centre de contrôle (1) et qu'on multiplexe (41, 52) les n communications correspondantes entre les premier et second niveaux.

2. Procédé selon la revendication 1, dans lequel on utilise des multiplexeurs logiciels (41, 52) commandés au fil du temps en fonction des besoins de communications phoniques avec les avions (4) en transit dans la zone à contrôler.

3. Procédé selon l'une des revendications 1 et 2, dans lequel le groupe (Gk) contient n communications vocales multiplexées (Vk), pour un paquet (Pk) de données de service (S) multiplexées.

4. Procédé selon l'une des revendications 1 à 3, dans lequel lesdites données de service (S) contiennent alors au moins les données de service (Sk) des n communications vocales multiplexées.

5. Procédé selon l'une des revendications 1 à 4, dans lequel on détermine le groupe (Gk) des n postes (4) du troisième niveau au centre (1) du premier niveau en même temps que l'on y sélectionne au moins un centre (2) du second niveau assurant le déport phonique desdits n postes (4) du troisième niveau.

6. Procédé selon la revendication 5, dans lequel les données de puissance (P) des signaux analogiques reçus des postes (4) du troisième niveau sont transmis au centre (1) du premier niveau en étant incluses dans lesdites données de service (S).

## Claims

1. Method for transmitting rate-limited and half-duplex voice communications, between a ground control centre (1) located at a first communication level and cockpits (4), in phonic communication with the control centre (1), of an aeroplane (4) passing through a predetermined geographical region and constituting a third communication level, by means of radio transmission/reception centres (2) in phonic retransmission between said first and third levels, these ground radio centres (2) constituting a second communication level in digital communication (3) with said first level and in analogue radio communication (5) with said third level,
the control centre (1) continuously selecting, at the first level, for each of the aeroplanes (4), the best radio transmission/reception centre (2) of the second level effectively used in phonic retransmission from a cockpit (4) of the third level, the selection being carried out according to the powers (P) of the analogue signals from said cockpit (4) of the third level which are received at the second level,
the method being **characterised in that**:
- at least one group (Gk) of a certain number n of cockpits (4) of the third level is associated with each centre (2) of the second level on the basis of the operation by the control centre (1) and **in that** the n corresponding communications between the first and second levels are multiplexed (41, 52).

2. Method according to claim 1, wherein software multiplexers (41, 52) are used which are controlled over time according to the need for phonic communications with the aeroplanes (4) in transit in the region to be controlled.

3. Method according to either claim 1 or claim 2, wherein the group (Gk) contains n multiplexed voice communications (Vk) for a packet (Pk) of multiplexed service data (S).

4. Method according to any of claims 1 to 3, wherein said service data (S) then contain at least the service data (Sk) of the n multiplexed voice communications.

5. Method according to any of claims 1 to 4, wherein the group (Gk) of the n cockpits (4) of the third level is determined at the centre (1) of the first level at the same time as at least one centre (2) of the second level is selected there, ensuring the phonic retransmission from said n cockpits (4) of the third level.

6. Method according to claim 5, wherein the power data (P) of the analogue signals received from the cockpits (4) of the third level are transmitted to the centre (1) of the first level by being included in said service data (S).

## Patentansprüche

1. Verfahren zur Übertragung von Sprachkommunikationen des Typs ratenbegrenzte und alternierende Übertragung, zwischen einem Kontrollzentrum am Boden (1), das sich auf einer ersten Kommunikationsebene befindet, und in telefonischer Verbindung mit dem Kontrollzentrum (1) befindlichen Cockpits (4) von Flugzeugen (4), die in einer vorbestimmten geographischen Zone fliegen und eine dritte Kommunikationsebene bilden, mittels Funksende- und -empfangszentren (2) in Form von phonischer Übertragung zwischen der ersten und dritten Ebene, wobei diese Boden-Funkzentren (2) eine zweite Kommunikationsebene in digitaler Verbindung (3) mit der ersten Ebene und in analoger Funkverbindung (5) mit der dritten Ebene bilden,
wobei das Kontrollzentrum (1) auf der ersten Ebene, für jedes der Flugzeuge (4), permanent das beste Funksende- und -empfangszentrum (2) auf der zweiten Ebene auswählt, das in Form von phonischer Übertragung von einem Cockpit (4) der dritten Ebene effektiv genutzt werden kann, wobei die Auswahl in Abhängigkeit von den Stärken (P) der analogen Signale des Cockpits (4) der dritten Ebene erfolgt, die auf der zweiten Ebene empfangen werden,
wobei das Verfahren **dadurch gekennzeichnet ist, dass**
- jedem Zentrum (2) der zweiten Ebene, mindestens eine Gruppe (Gk) einer bestimmten Anzahl n von Cockpits (4) der dritten Ebene auf der Grundlage der Auswertung durch das Kontrollzentrum (1) zugeordnet wird und dass die entsprechenden n Kommunikationen zwischen der ersten und zweiten Ebene multiplexiert (41, 52) werden.

2. Verfahren nach Anspruch 1, wobei Software-Multiplexer (41, 52) verwendet werden, die im Laufe der Zeit in Abhängigkeit von dem Bedarf an Sprachkommunikationen mit den Flugzeugen (4), welche in der zu kontrollierenden Zone fliegen, gesteuert werden.

3. Verfahren nach einem der Ansprüche 1 und 2, wobei die Gruppe (Gk) n multiplexierte Sprachkommunikationen (Vk), für ein Paket (Pk) multiplexierter Dienstdaten (S), umfasst.

4. Verfahren nach einem der Ansprüche 1 bis 3, wobei die Dienstdaten (S) dann mindestens die Dienstdaten (Sk) der n multiplexierten Sprachkommunikationen umfassen.

5. Verfahren nach einem der Ansprüche 1 bis 4, wobei die Gruppe (Gk) der n Cockpits (4) der dritten Ebene im Zentrum (1) der ersten Ebene zur gleichen Zeit bestimmt wird, wie mindestens ein Zentrum (2) der zweiten Ebene daraus ausgewählt wird, das die phonische Übertragung von den n Cockpits (4) der dritten Ebene sicherstellt.

6. Verfahren nach Anspruch 5, wobei die Daten der Stärke (P) der analogen Signale, die von den Cockpits (4) der dritten Ebene empfangen werden, an das Zentrum (1) der ersten Ebene übertragen werden, indem sie in den Dienstdaten (S) enthalten sind.
